# EUROPEAN PATENT APPLICATION

(11) **EP 4 618 628 A1**
(43) Date of publication of application: **17.09.2025**
(21) Application number: 22964793.8
(22) Date of filing: 10.11.2022
(51) Int. Cl.: H04W 48/18

(54) **METHOD FOR PROVIDING LOCALIZATION SERVICE BY MEANS OF HOSTING NETWORK, AND APPARATUS THEREFOR**

(71) Applicant: Beijing Xiaomi Mobile Software Co., Ltd., Beijing 100085 (CN)
(72) Inventor: LIU, Jianning, Beijing 100085 (CN); LIANG, Haoran, Beijing 100085 (CN)
(74) Representative: Stöckeler, Ferdinand
(86) International application number: PCT/CN2022/131106
(87) International publication number: WO 2024/098323

(57) **Abstract**

Disclosed in the embodiments of the present disclosure are a method for providing a localization service by means of a hosting network, and an apparatus therefor. The method comprises: a terminal device acquiring localization service information from the current first network; and the terminal device selecting a target hosting network according to the localization service information, wherein the target hosting network is used for providing a localization service. By means of implementing the embodiments of the present disclosure, the problem of how a terminal device acquires a localization service can be solved, such that the terminal device can use a localization service provided by a hosting network.

## Description

### TECHNICAL FIELD

The present disclosure relates to the field of communication technology, and specifically to a method and an apparatus for providing a localized service via a hosting network.

### BACKGROUND

In a communication system, when a terminal needs to obtain a localized service, the terminal may request the localized service from a corresponding localized server. For example, the terminal may access a hosting network to request the localized service from the localization server, enabling the terminal to obtain the localized service.

However, at present, there is still a lack of an effective means to solve the problem of how the terminal obtains the localized service.

### SUMMARY

Embodiments of the present disclosure provide a method and an apparatus for providing a localized service via a hosting network. A target hosting network may be selected based on localized service information, so as to provide the localized service to a terminal via the target hosting network, capable of solving the problem of how the terminal obtains the localized service, and enabling the terminal to use the localized service provided by the hosting network.

According to a first aspect, embodiments of the present disclosure provide a method for providing a localized service via a hosting network. The method is performed by a terminal, and includes:
obtaining localized service information from a current first network; and
selecting a target hosting network based on the localized service information, in which the target hosting network is configured to provide the localized service.

In this technical solution, the target hosting network may be selected via the localized service information, so as to provide the localized service to the terminal via the target hosting network, which may solve the problem of how the terminal obtains the localized service, and enable the terminal to use the localized service provided by the hosting network.

In an implementation, the localized service information includes at least one of:
a localized service name;
an Internet protocol (IP) address of a localization server;
a fully qualified domain name (FQDN) of a localization server;
one or more hosting network identifiers and/or names; or
valid time information and/or valid location information.

In a possible implementation, obtaining the localized service information from the current first network includes:
sending a registration request to the current first network, and obtaining the localized service information from the current first network based on the registration request.

In a possible implementation, sending the registration request to the current first network, and obtaining the localized service information from the current first network based on the registration request includes:
sending the registration request to an access and mobility management function (AMF), in which the registration request includes standalone non-public network (SNPN) onboarding indication information, and the SNPN onboarding indication information indicates the current first network to deliver the localized service information to the terminal; and
receiving the localized service information sent by the AMF after the terminal is successfully registered in a network, in which the localized service information is derived from preconfiguration on the AMF or from a default credential server (DCS).

In a possible implementation, the method further includes: accessing the localized service by triggering establishment of a restricted packet data unit (PDU) session for the localized service via the target hosting network based on the localized service information.

In a possible implementation, sending the registration request to the current first network, and obtaining the localized service information from the current first network based on the registration request includes:
sending the registration request to a home network of the terminal in a case that the current first network is the home network; and
receiving the localized service information sent by the AMF after the terminal is successfully registered in a network, in which the localized service information is derived from preconfiguration on the AMF or from unified data management (UDM) or a unified data repository (UDR) of the home network.

In a possible implementation, sending the registration request to the current first network, and obtaining the localized service information from the current first network based on the registration request includes:
sending the registration request to a serving network of the terminal in a case that the current first network is the serving network; and
receiving the localized service information sent by the AMF after the terminal is successfully registered in a network, in which the localized service information is derived from preconfiguration on the AMF or is sent to the AMF by a home network of the terminal via a steering of roaming (SoR) mechanism.

In a possible implementation, the method further includes: triggering an onboarding registration process of the terminal on a second network in a case that the terminal selects the second network as the target hosting network, in which the second network is different from the current first network.

According to a second aspect, embodiments of the present disclosure provide a method for providing a localized service via a hosting network. The method is performed by an AMF, and includes:
receiving a registration request sent by a terminal; and
sending localized service information to the terminal after the terminal is successfully registered in a network, in which the localized service information is configured to assist the terminal in selecting a target hosting network, and the target hosting network is configured to provide the localized service.

In this technical solution, the AMF may send the localized service information to the terminal, and then the terminal selects the target hosting network based on the localized service information, so as to provide the localized service to the terminal via the target hosting network, which may solve the problem of how the terminal obtains the localized service, and enable the terminal to use the localized service provided by the hosting network.

In an implementation, the registration request includes SNPN onboarding indication information, the SNPN onboarding indication information indicating a current first network to deliver the localized service information to the terminal, in which the localized service information is derived from preconfiguration on the AMF or from a DCS.

In another implementation, the registration request does not include the SNPN onboarding indication information, in which the localized service information is derived from preconfiguration on the AMF or from a home network of the terminal.

In a possible implementation, the localized service information includes at least one of:
a localized service name;
an IP address of a localization server;
a FQDN of a localization server;
one or more hosting network identifiers and/or names; or
valid time information and/or valid location information.

The target hosting network is determined from the one or more hosting networks provided in the localized service information.

According to a third aspect, embodiments of the present disclosure provide a method for providing a localized service via a hosting network. The method is performed by a core network and includes:
receiving a registration request sent by a terminal; and
sending localized service information to the terminal, in which the localized service information is configured to assist the terminal in selecting a target hosting network, and the target hosting network is configured to provide the localized service.

According to a fourth aspect, embodiments of the present disclosure provide a method for providing a localized service via a hosting network, including:
receiving, by the AMF, a registration request sent by a terminal; and
sending, by the AMF, localized service information to the terminal after the terminal is successfully registered in a network, in which the localized service information is configured to assist the terminal in selecting a target hosting network, and the target hosting network is configured to provide the localized service.

According to a fifth aspect, embodiments of the present disclosure provide a communication apparatus. The communication apparatus has some or all of the functions of the terminal in the method in the first aspect above, for example, the communication apparatus may have the functions in some or all of the embodiments of the present disclosure or may have the functions for independently implementing any one of the embodiments of the present disclosure. The functions may be realized by hardware or by software which is executed by a hardware. The hardware or software includes one or more units or modules corresponding to the above functions.

In an implementation, the communication apparatus may include a transceiver module and a processing module, in which the processing module is configured to support the communication apparatus to perform corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module may be a memory.

According to a sixth aspect, embodiments of the present disclosure provide a communication apparatus. The communication apparatus has some or all of the functions of the AMF in the method in the second aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the structure of the communication apparatus may include a transceiver module and a processing module, in which the processing module is configured to support the communication apparatus to perform corresponding functions in the above method, and the transceiver module is configured to support a communication between the communication apparatus and other devices. The communication apparatus may also include a storage module, in which the storage module is configured to couple with the transceiver module and the processing module, and save a computer program and data necessary for the communication apparatus.

According to a seventh aspect, embodiments of the present disclosure provide a communication system. The communication system is configured to implement the method in the third aspect.

According to an eighth aspect, embodiments of the present disclosure provide a communication system. The communication system includes:
an AMF configured to implement the method in the second aspect above.

According to a ninth aspect, embodiments of the present disclosure provide a communication apparatus including a processor. When a computer program in a memory is called by the processor, the method in the first aspect is implemented.

According to a tenth aspect, embodiments of the present disclosure provide a communication apparatus including a processor. When a computer program in a memory is called by the processor, the method in the second aspect is implemented.

According to an eleventh aspect, embodiments of the present disclosure provide a communication apparatus, including a processor and a memory for storing a computer program. When the computer program stored in the memory is executed by the processor, the communication apparatus is caused to implement the method in the first aspect.

According to a twelfth aspect, embodiments of the present disclosure provide a communication apparatus, including a processor and a memory for storing a computer program. When the computer program stored in the memory is executed by the processor, the communication apparatus is caused to implement the method in the second aspect.

According to a thirteenth aspect, embodiments of the present disclosure provide a communication apparatus, including a processor and an interface circuit for receiving code instructions and sending the code instructions to the processor, in which the processor is configured to run the code instructions to cause the apparatus to implement the method in the first aspect.

According to a fourteenth aspect, embodiments of the present disclosure provide a communication apparatus, including a processor and an interface circuit for receiving code instructions and sending the code instructions to the processor, in which the processor is configured to run the code instructions to cause the apparatus to implement the method in the second aspect.

According to a fifteenth aspect, embodiments of the present disclosure provide a communication system, in which the system includes the communication apparatus in the fifth aspect and the communication apparatus in the sixth aspect, or the communication apparatus in the seventh aspect and the communication apparatus in the eighth aspect, or the communication apparatus in the ninth aspect and the communication apparatus in the tenth aspect, or the communication apparatus in the eleventh aspect and the communication apparatus in the twelfth aspect.

According to a sixteenth aspect, embodiments of the present disclosure provide a computer readable storage medium for storing instructions used by the terminal. When the instructions are executed, the terminal is caused to implement the method in the first aspect.

According to a seventeenth aspect, embodiments of the present disclosure provide a computer readable storage medium for storing instructions used by the network device. When the instructions are executed, the AMF is caused to implement the method in the second aspect.

According to an eighteenth aspect, embodiments of the present disclosure provide a computer program product including a computer program. When the computer program is running on a computer, the computer is caused to implement the method in the first aspect.

According to a nineteenth aspect, embodiments of the present disclosure provide a computer program product including a computer program. When the computer program is running on a computer, the computer is caused to implement the method in the second aspect.

According to a twentieth aspect, embodiments of the present disclosure provide a chip system, including at least one processor and an interface configured to support the terminal to perform the functions in the first aspect, for example, at least one of determining or processing data and information in the above method. In one possible design, the chip system also includes a memory for saving a computer program and data necessary for the terminal. The chip system may include a chip, or a chip and other discrete devices.

According to a twenty-first aspect, embodiments of the present disclosure provide a chip system, including at least one processor and an interface configured to support the AMF to perform the functions in the second aspect, for example, at least one of determining or processing data and information in the above method. In one possible design, the chip system also includes a memory for saving a computer program and data necessary for the AMF. The chip system may include a chip, or a chip and other discrete devices.

According to a twenty-second aspect, embodiments of the present disclosure provide a computer program. When the computer program is running on a computer, the computer is caused to implement the method in the first aspect.

According to a twenty-third aspect, embodiments of the present disclosure provide a computer program. When the computer program is running on a computer, the computer is caused to implement the method in the second aspect.

### BRIEF DESCRIPTION OF THE DRAWINGS

In order to more clearly illustrate the technical solution in embodiments of the disclosure or the background, the accompanying drawings to be used in embodiments of the disclosure or the background will be described below.
FIG. 1 is a flowchart of a method for providing a localized service via a hosting network according to embodiments of the present disclosure.
FIG. 2 is a flowchart of another method for providing a localized service via a hosting network according to embodiments of the present disclosure.
FIG. 3 is a flowchart of another method for providing a localized service via a hosting network according to embodiments of the present disclosure.
FIG. 4 is a flowchart of another method for providing a localized service via a hosting network according to embodiments of the present disclosure.
FIG. 5 is a flowchart of another method for providing a localized service via a hosting network according to embodiments of the present disclosure.
FIG. 6 is a flowchart of another method for providing a localized service via a hosting network according to embodiments of the present disclosure.
FIG. 7 is a flowchart of another method for providing a localized service via a hosting network according to embodiments of the present disclosure.
FIG. 8 is a flowchart of another method for providing a localized service via a hosting network according to embodiments of the present disclosure.
FIG. 9 is a block diagram of a communication apparatus according to embodiments of the present disclosure.
FIG. 10 is a block diagram of another communication apparatus according to embodiments of the present disclosure.
FIG. 11 is a block diagram of a chip according to embodiments of the present disclosure.

### DETAILED DESCRIPTION

The embodiments of the present disclosure are described in detail below. Examples of the embodiments are shown in the accompanying drawings, in which the same or similar reference numerals throughout the present embodiment represent the same or similar elements or elements having the same or similar functions. The embodiments below with reference to the accompanying drawings are exemplary and are intended to explain the present disclosure, but should not be construed as a limitation to the present disclosure. In the description of the present disclosure, unless otherwise stated, "/" means "or", for example, A/B means A or B. In this disclosure, the term "and/or" is only an association relation describing an associated object, indicating that there may be three kinds of relations, for example, A and/or B may be represented as the following three conditions: there is A, there is A and B simultaneously, and there is B.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "upon", or "in response to determining..."

The embodiments of the present disclosure are described in detail below. Examples of the embodiments are shown in the accompanying drawings, in which the same or similar reference numerals throughout the present embodiment represent the same or similar elements or elements having the same or similar functions. The embodiments below with reference to the accompanying drawings are exemplary and are intended to explain the present disclosure, but should not be construed as a limitation to the present disclosure.

For convenience of understanding, terms in the present disclosure will be first introduced.

### 1. 5th generation mobile networks (5G)

The 5G is a new generation of broadband mobile communication technology featuring high speed and low latency, which is a network infrastructure for realizing an interconnection among a human, a machine and a thing.

### 2. Home network (also known as a belonging network)

The home network is a network system provided by an operator subscribed with the terminal, for example, this network system includes an access network and a core network.

### 3. Hosting network

The hosting network is a network system provided by an operator other than the one subscribed with the terminal, for example, this network may include an access network and a core network.

It is to be noted that the technical solution of embodiments of the present disclosure may be applied to various communication systems, for example, a 5th generation (5G) mobile communication system, a 5G new radio (NR) system, or other new mobile communication systems in the future. It may be understood that the communication system in the embodiments of the present disclosure is intended to illustrate the technical solution in the embodiments of the present disclosure more clearly, and does not constitute a limitation of the technical solution in the embodiments of the present disclosure. Those skilled in the art may know that the technical solution in the embodiments of the present disclosure is applicable for similar technical problems, with the evolution of a system architecture and the emergence of a new service scene.

The terminal in embodiments of the present disclosure is an entity on the user side for receiving or sending signals, such as a mobile phone. The terminal may also be called a terminal, a user equipment (UE), a mobile station (MS), a mobile terminal (MT), etc. The terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminal.

With reference to accompanying drawings, the following provides a detailed description of the method and the apparatus for providing a localized service via a hosting network in the embodiments of the present disclosure.

It needs to be noted that in the present disclosure, the method for providing a localized service via a hosting network provided by any embodiment may be performed independently, any implementation in the embodiments may also be performed independently, or be performed with other embodiments, or be performed with the possible implementation in other embodiments, or be performed with any one of relevant technical solutions. It may be understood that all above solutions fall within the scope of protection of the present disclosure.

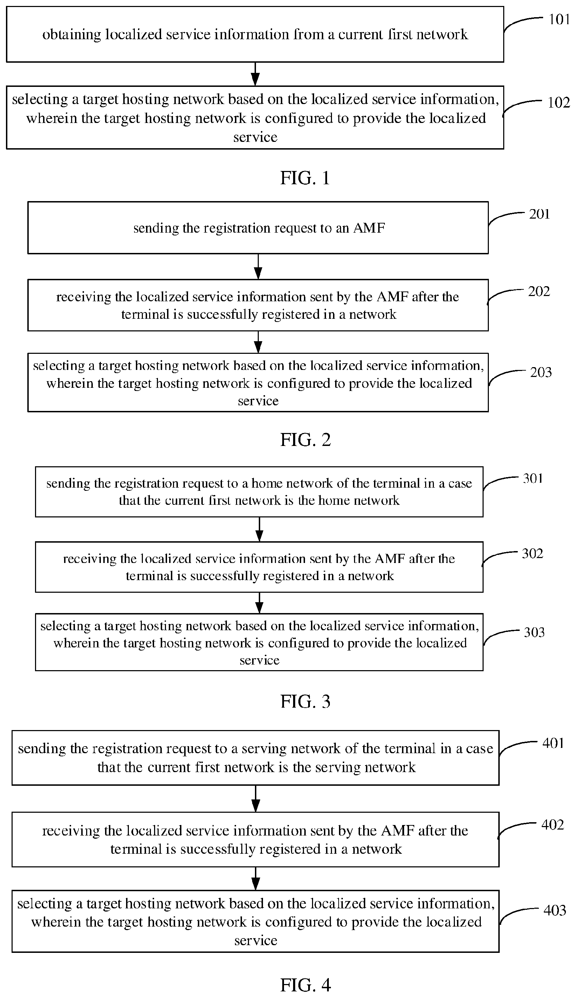

Please refer to FIG. 1, which is a flowchart of a method for providing a localized service via a hosting network according to embodiments of the present disclosure. It needs to be noted that this method may be performed by a terminal. As shown in FIG. 1, the method may include, but is not limited to, the following steps.

At step 101, localized service information is obtained from a current first network.

In an embodiment of the present disclosure, the current first network may be a home network of the terminal, or a serving network of the terminal, or a hosting network. For example, the current first network may include a (radio) access network ((R)AN) and a core network. The core network may include, but is not limited to, an access and mobility management function (AMF).

In an embodiment of the present disclosure, the terminal may obtain the localized service information from the core network of the current first network. As an example of a possible implementation, the terminal may obtain the localized service information from the AMF of the core network in the current first network.

In a possible implementation, the terminal sends a registration request to the current first network, and obtains the localized service information from the current first network based on the registration request.

In a possible implementation, in a case that the terminal is registered in a network via an onboarding type, the localized service information is derived from preconfiguration on the AMF or from a default credential server (DCS).

In another possible implementation, in a case that the current first network is the home network of the terminal, the localized service information is derived from preconfiguration on the AMF of the core network in the current first network or from unified data management (UDM) or a unified data repository (UDR) of the home network of the terminal. The UDM and the UDR are network elements where the home network may store the localized service information.

In another possible implementation, in a case that the current first network is the serving network of the terminal (in a roaming scenario), the localized service information is derived from preconfiguration on the AMF of the core network in the current first network, or the localized service information may be sent to the AMF by the home network of the terminal via a steering of roaming (SoR) mechanism and then sent to the terminal by the AMF.

In some embodiments of the present disclosure, the localized service information may be configuration information, and the terminal may obtain a corresponding localized service based on the configuration information. The localized service information may include, but is not limited to, at least one of: a localized service name; an Internet protocol (IP) address of a localization server; a fully qualified domain name (FQDN, also known as an official domain name or full domain name) of a localization server; one or more hosting network identifiers and/or names; or valid time information and/or valid location information.

In an embodiment of the present disclosure, the localized service information may include, but is not limited to, the localized service name or the FQDN of the localized server.

In an embodiment of the present disclosure, the localized service information may include, but is not limited to, the localized service name or the IP address of the localized server.

In an embodiment of the present disclosure, the localized service information may include, but is not limited to, the localized service name, the one or more hosting network identifiers and/or names, the valid time information and/or valid location information. The location may be located place information.

In an implementation, the valid time information may include a time period that the localized service is allowed to be performed, for example, the localized service is allowed to be performed from 8:00 to 16:00 at daytime. The valid location information may include location information that the localized service is allowed to be performed, for example, the localized service is allowed to be performed in a region A. It may be understood that contents included in the valid time information and the valid location information are merely examples and may not be regarded as specific limitations of the present disclosure, that is, the valid time information and the valid location information may also respectively include other information, which is not limited in the embodiments of the present disclosure.

It needs to be noted that the above embodiments are not exhaustive but merely illustrative of some examples. The above embodiments may be implemented independently or in various combinations. The above examples are for illustrative purposes only and do not specifically limit the scope of protection of the embodiments of the present disclosure.

At step 102, a target hosting network is selected based on the localized service information, in which the target hosting network is configured to provide the localized service.

In an implementation, the target hosting network may act as a service provider for the localized service.

In an embodiment of the present disclosure, the terminal may select the target hosting network based on the localized service information. In this way, the terminal may access the localized service by triggering establishment of a packet data unit (PDU) session for the localized service via the target hosting network based on the localized service information. The target hosting network may be determined from one or more hosting networks in the localized service information.

In a possible implementation, selection of the target hosting network may be made based on a request from a user, that is, made by using manual selection, unless the terminal may maintain the PDU session established with the home network and maintain a service provided by the home network on the PDU session while selecting the target hosting network.

For example, taking the manual selection of the target hosting network as an example, the terminal may display services supported by respective hosting networks (such as localized services provided by the hosting networks) on a display interface of the terminal via the localized service information. The user may perform selections of the localized service and the hosting network on the display interface. For example, when receiving a selected operation for a displayed service (such as the localized service), the terminal may determine a specific localized service and a target hosting network corresponding to a selected localized service. The selected operation may be, for example, clicking on the service, or enclosing the service, etc.

Optionally, in some embodiments of the present disclosure, in a case that the terminal selects a second network as the target hosting network, the terminal may trigger an onboarding registration process of the terminal on a second network. The second network is different from the current first network. Thus, a communication between the terminal and the network may be guaranteed, so that the terminal may use the service provided by a selected network.

By implementing the embodiments of the present disclosure, the target hosting network may be selected based on the localized service information, so as to provide the localized service to the terminal via the target hosting network, which may solve the problem of how the terminal obtains the localized service, and enable the terminal to use the localized service provided by the hosting network.

It needs to be noted that terminal may register in the network via the onboarding type to obtain the localized service information. Please refer to FIG. 2, which is a flowchart of another method for providing a localized service via a hosting network according to embodiments of the present disclosure. It needs to be noted that the method may be performed by a terminal. As shown in FIG. 2, this method may include, but is not limited to, the following steps.

At step 201, the registration request is sent to an AMF.

In an implementation, the AMF is an AMF of a core network in a current first network. The terminal may send the registration request to the AMF of the core network in the current first network via an access network in the current first network.

In an embodiment of the present disclosure, the registration request may include standalone non-public network (SNPN) onboarding indication information. The SNPN onboarding indication information indicates the current first network to deliver the localized service information to the terminal.

In a possible implementation, the terminal sends the registration request to the AMF via the (R)AN with "SNPN onboarding" as a registration type. The registration request includes SNPN onboarding indication information. The SNPN onboarding indication information may indicate the AMF to send the localized service information to the terminal.

At step 202, the localized service information sent by the AMF is received after the terminal is successfully registered in a network.

In a possible implementation, the terminal may receive the localized service information sent by the AMF of the core network in the current first network after the terminal is successfully registered in the network.

In an embodiment of the present disclosure, the localized service information is derived from preconfiguration on the AMF or from a DCS.

In a possible implementation, the localized service information received by the terminal may be derived from the preconfiguration on the AMF, or from the DCS. For example, an authentication/security procedure is performed between the terminal and the DCS via the AMF or an authentication server function (AUSF). When the authentication is successful, the DCS sends the localized service information to the AMF via the AUSF, and the AMF sends the localized service information derived from the DCS to the terminal.

In some embodiments of the present disclosure, the localized service information may include, but is not limited to, at least one of: a localized service name; an IP address of a localization server; an FQDN (also known as an official domain name or a full domain name) of a localization server; one or more hosting network identifiers and/or names; or valid time information and/or valid location information.

In an embodiment of the present disclosure, the localized service information may include, but is not limited to, the localized service name or the FQDN of the localized server.

In an embodiment of the present disclosure, the localized service information may include, but is not limited to, the localized service name or the IP address of the localized server.

In an embodiment of the present disclosure, the localized service information may include, but is not limited to, the localized service name, the one or more hosting network identifiers and/or names, the valid time information and/or valid location information. The location may be located place information.

In an implementation, the valid time information may include a time period that the localized service is allowed to be performed, for example, the localized service is allowed to be performed from 8:00 to 16:00 at daytime. The valid location information may include location information that the localized service is allowed to be performed, for example, the localized service is allowed to be performed in a region A. It may be understood that contents included in the valid time information and the valid location information are merely examples and may not be regarded as specific limitations of the present disclosure, that is, the valid time information and the valid location information may also respectively include other information, which is not limited in the embodiments of the present disclosure.

It needs to be noted that the above embodiments are not exhaustive but merely illustrative of some examples. The above embodiments may be implemented independently or in various combinations. The above examples are for illustrative purposes only and do not specifically limit the scope of protection of the embodiments of the present disclosure.

At step 203, a target hosting network is selected based on the localized service information, in which the target hosting network is configured to provide the localized service.

In an implementation, the target hosting network may act as a service provider for the localized service.

In a possible implementation, the target hosting network may be the SNPN.

In an embodiment of the present disclosure, the terminal may select the target hosting network based on the localized service information. In this way, the terminal may access the localized service by triggering establishment of a restricted PDU session for the localized service via the target hosting network based on the localized service information.

In a possible implementation, selection of the target hosting network may be made based on a request from a user, that is, made by using manual selection, unless the terminal may maintain the PDU session established with the home network and maintain a service provided by the home network on the PDU session while selecting the target hosting network.

For example, taking the manual selection of the target hosting network as an example, the terminal may display services supported by respective hosting networks (such as localized services provided by the hosting networks) on a display interface of the terminal via the localized service information. The user may perform selections of the localized service and the hosting network on the display interface. For example, when receiving a selected operation for a displayed service (such as the localized service), the terminal may determine a specific localized service and a target hosting network corresponding to a selected localized service. The selected operation may be, for example, clicking on the service, or enclosing the service, etc.

Optionally, in some embodiments of the present disclosure, in a case that the terminal selects a second network as the target hosting network, the terminal may trigger an onboarding registration process of the terminal on a second network. The second network is different from the current first network. Thus, a communication between the terminal and the network may be guaranteed, so that the terminal may use the service provided by a selected network.

By implementing the embodiments of the present disclosure, after the authentication between the terminal and the DCS via the SNPN, the AMF obtains the localized service information from the DCS via the AUSF and sends the localized service information to the terminal. The terminal triggers the establishment of the restricted PDU session for the localized service via the hosting network based on the localized service information, so as to enhance a configuration process in a UE onboarding operation period, which may solve the problem of how the terminal obtains the localized service, and enable the terminal to use the localized service provided by the hosting network.

It needs to be noted that, in a home network scenario, the terminal may obtain the localized service information after the terminal is normally registered in the network. Please refer to FIG. 3, which is a flowchart of another method for providing a localized service via a hosting network according to embodiments of the present disclosure. It needs to be noted that the method may be performed by a terminal. As shown in FIG. 3, this method may include, but is not limited to the following steps.

At step 301, the registration request is sent to a home network of the terminal in a case that the current first network is the home network.

In an embodiment of the present disclosure, in the home network scenario, the terminal may send the registration request to the home network. The registration request is configured to assist the terminal in obtaining the localized service information. In an implementation, the terminal is normally registered in the network. After the terminal is successfully registered, the core network in the current first network (such as the AMF in the core network) automatically delivers required localized service information to the terminal.

At step 302, the localized service information sent by the AMF is received after the terminal is successfully registered in a network.

In an implementation, the terminal receives the localized service information sent by the AMF of the core network after the terminal is successfully registered in the network.

In an embodiment of the present disclosure, the localized service information is derived from preconfiguration on the AMF of the core network or from UDM or an UDR of the home network.

In a possible implementation, the terminal may receive the localized service information sent by the AMF in the core network after the terminal successfully performs the normal network registration. As an example, the localized service information may be carried in a registration accept message.

In a possible implementation, the localized service information received by the terminal may be derived from the preconfiguration on the AMF (for example, the localized service information is pre-configured on the AMF).

In another possible implementation, the localized service information received by the terminal may also be sent from the home network to the AMF. The AMF sends the localized service information sent by the home network to the terminal. For example, the localized service information sent by the AMF to the terminal may be sent by the UDM or the UDR of the home network to the AMF, and then the AMF sends the localized service information to the terminal.

In some embodiments of the present disclosure, the localized service information may include, but is not limited to, at least one of: a localized service name; an IP address of a localization server; an FQDN (also known as an official domain name or a full domain name) of a localization server; one or more hosting network identifiers and/or names; or valid time information and/or valid location information.

In an embodiment of the present disclosure, the localized service information may include, but is not limited to, the localized service name or the FQDN of the localized server.

In an embodiment of the present disclosure, the localized service information may include, but is not limited to, the localized service name or the IP address of the localized server.

In an embodiment of the present disclosure, the localized service information may include, but is not limited to, the localized service name, the one or more hosting network identifiers and/or names, the valid time information and/or valid location information. The location may be located place information.

In an implementation, the valid time information may include a time period that the localized service is allowed to be performed, for example, the localized service is allowed to be performed from 8:00 to 16:00 at daytime. The valid location information may include location information that the localized service is allowed to be performed, for example, the localized service is allowed to be performed in a region A. It may be understood that contents included in the valid time information and the valid location information are merely examples and may not be regarded as specific limitations of the present disclosure, that is, the valid time information and the valid location information may also respectively include other information, which is not limited in the embodiments of the present disclosure.

It needs to be noted that the above embodiments are not exhaustive but merely illustrative of some examples. The above embodiments may be implemented independently or in various combinations. The above examples are for illustrative purposes only and do not specifically limit the scope of protection of the embodiments of the present disclosure.

At step 303, a target hosting network is selected based on the localized service information, in which the target hosting network is configured to provide the localized service.

In an implementation, the target hosting network may act as a service provider for the localized service.

In the embodiments of the present disclosure, the terminal may select the target hosting network based on the localized service information. In this way, the terminal may access the localized service by triggering establishment of a PDU session for the localized service via the target hosting network based on the localized service information. An existing process may be used to access the localized service, which will not be repeated here.

In a possible implementation, selection of the target hosting network may be made based on a request from a user, that is, made by using manual selection, unless the terminal may maintain the PDU session established with the home network and maintain a service provided by the home network on the PDU session while selecting the target hosting network.

For example, taking the manual selection of the target hosting network as an example, the terminal may display services supported by respective hosting networks (such as localized services provided by the hosting networks) on a display interface of the terminal via the localized service information. The user may perform selections of the localized service and the hosting network on the display interface. For example, when receiving a selected operation for a displayed service (such as the localized service), the terminal may determine a specific localized service and a target hosting network corresponding to a selected localized service. The selected operation may be, for example, clicking on the service, or enclosing the service, etc.

Optionally, in some embodiments of the present disclosure, in a case that the terminal selects a second network as the target hosting network, the terminal may trigger an onboarding registration process of the terminal on a second network. The second network is different from the current first network. Thus, a communication between the terminal and the network may be guaranteed, so that the terminal may use the service provided by a selected network.

By implementing the embodiments of the present disclosure, the terminal obtains the localized service information by normally registering in the home network via the terminal, the terminal then selects the target hosting network based on the localized service information, so as to provide the localized service to the terminal via the target hosting network, which may solve the problem of how the terminal obtains the localized service, and enable the terminal to may use the localized service provided by the hosting network.

It needs to be noted that in a roaming scenario, after the terminal is normally registered in the network, the terminal may enable the home network to return the localized service information required by the terminal via a roaming AMF. Please refer to FIG. 4, which is a flowchart of another method for providing a localized service via a hosting network according to embodiments of the present disclosure. It needs to be noted that the method may be performed by a terminal. As shown in FIG. 4, the method may include, but is not limited to the following steps.

At step 401, the registration request is sent to a serving network of the terminal in a case that the current first network is the serving network.

In an embodiment of the present disclosure, in the roaming scenario, the terminal may send the registration request to the serving network. The registration request is configured to assist the terminal in obtaining the localized service information. In an implementation, the terminal is normally registered in the network. After the terminal is successfully registered, the home network returns the localized service information required by the terminal via the roaming AMF.

At step 402, the localized service information sent by the AMF is received after the terminal is successfully registered in a network.

In an implementation, the terminal receives the localized service information sent by the AMF of the core network after the terminal is successfully registered in the network.

In an embodiment of the present disclosure, the localized service information is derived from the preconfiguration on the AMF in the core network, or the localized service information is sent to the core network by the home network of the terminal via a SoR mechanism, for example, the localized service information is sent to the AMF of the core network by the home network of the terminal via the SoR mechanism.

In a possible implementation, the terminal may receive the localized service information sent by the AMF in the core network after the terminal successfully performs the normal network registration. As an example, the localized service information may be carried in a registration accept message.

In a possible implementation, the localized service information received by the terminal may be derived from the preconfiguration on the AMF (for example, the localized service information is pre-configured on the AMF).

In another possible implementation, the localized service information received by the terminal may also be sent from the home network of the terminal to the AMF via the SoR mechanism. For example, in a registration process where the terminal is located in the serving network (also known as a visiting place or a roaming place, that is, the roaming scenario), a UDM (of the home network) network element corresponding to the terminal may respond to a subscriber information request of the visiting AMF (that is, the AMF of the core network in the current first network) network element and send SoR information to the visiting AMF network element. The SoR information carries the localized service information required by the terminal. The terminal selects the target hosting network based on the localized service information fed back by the visiting AMF network element.

At step 403, a target hosting network is selected based on the localized service information, in which the target hosting network is configured to provide the localized service.

In an implementation, the target hosting network may act as a service provider for the localized service.

In an embodiment of the present disclosure, the terminal may select the target hosting network based on the localized service information. In this way, the terminal may access the localized service by triggering establishment of a PDU session for the localized service via the target hosting network based on the localized service information. An existing process may be used to access the localized service, which will not be repeated here.

In a possible implementation, selection of the target hosting network may be made based on a request from a user, that is, made by using manual selection, unless the terminal may maintain the PDU session established with the home network and maintain a service provided by the home network on the PDU session while selecting the target hosting network.

For example, taking the manual selection of the target hosting network as an example, the terminal may display services supported by respective hosting networks (such as localized services provided by the hosting networks) on a display interface of the terminal via the localized service information. The user may perform selections of the localized service and the hosting network on the display interface. For example, when receiving a selected operation for a displayed service (such as the localized service), the terminal may determine a specific localized service and a target hosting network corresponding to a selected localized service. The selected operation may be, for example, clicking on the service, or enclosing the service, etc.

Optionally, in some embodiments of the present disclosure, in a case that the terminal selects a second network as the target hosting network, the terminal may trigger an onboarding registration process of the terminal on a second network. The second network is different from the current first network. Thus, a communication between the terminal and the network may be guaranteed, so that the terminal may use the service provided by a selected network.

By implementing the embodiments of the present disclosure, the terminal obtains the localized service information after the terminal is normally registered in the serving network, and then the terminal selects the target hosting network based on the localized service information, so as to provide the localized service to the terminal via the target hosting network, which may solve the problem of how the terminal obtains the localized service, and enable the terminal to use the localized service provided by the hosting network.

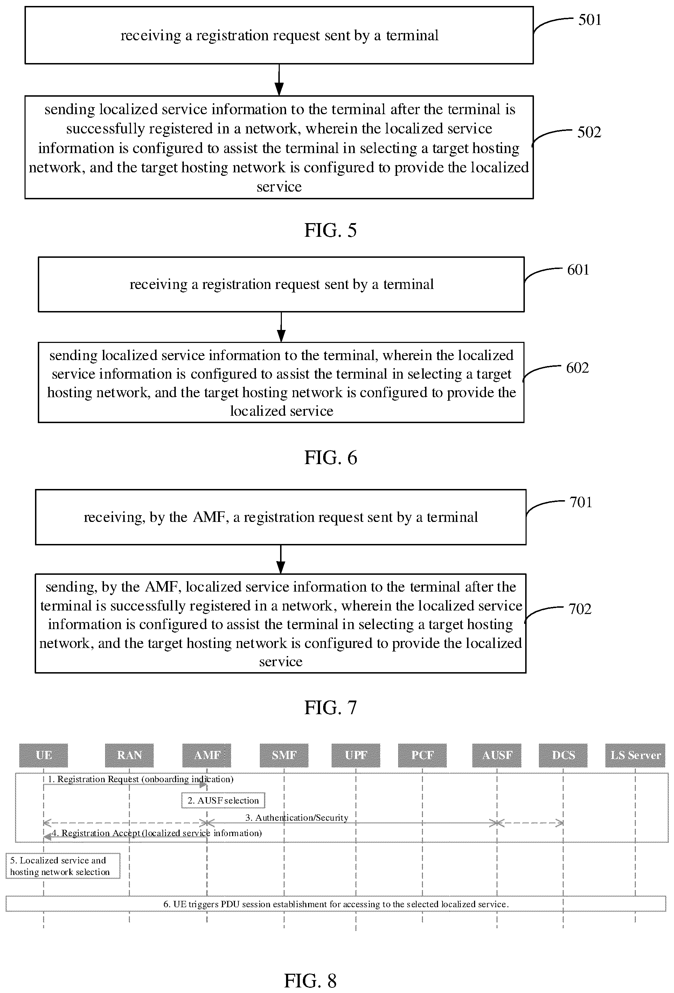

It may be understood that the above embodiment is an implementation that describes the method for providing a localized service via a hosting network from a terminal side in the embodiments of the present disclosure. The embodiments of the present disclosure also propose a method for providing a localized service via a hosting network. An implementation of the method for providing a localized service via a hosting network will be described from an AMF side below. Please refer to FIG. 5, which is a flowchart of another method for providing a localized service via a hosting network according to embodiments of the present disclosure. It needs to be noted that the method may be performed by an AMF. As shown in FIG. 5, the method may include but is not limited to the following steps.

At step 501, a registration request sent by a terminal is received.

At step 502, localized service information is sent to the terminal after the terminal is successfully registered in a network.

In an embodiment of the present disclosure, the localized service information is configured to assist the terminal in selecting a target hosting network, and the target hosting network is configured to provide the localized service.

Optionally, in some embodiments of the present disclosure, the registration request includes SNPN onboarding indication information. The SNPN onboarding indication information indicates a current first network to deliver the localized service information to the terminal, in which the localized service information is derived from preconfiguration on the AMF or from a DCS. As an example, the current first network may include an (R)AN and a core network. The AMF in this embodiment is the AMF of the core network in the current first network. The current first network may be a network connected to the terminal, or may be a home network of the terminal, or may be a serving network of the terminal, or may be a hosting network.

In a possible implementation, the AMF receives the registration request sent by the terminal via the (R)AN with "SNPN onboarding" as a registration type. The registration request includes the SNPN onboarding indication information. The SNPN onboarding indication information may indicate the AMF to send the localized service information to the terminal.

The localized service information sent by the AMF to the terminal may be derived from the preconfiguration on the AMF or from the DCS. For example, an authentication/security procedure is performed between the terminal and the DCS via the AMF or an AUSF. When the authentication is successful, the DCS sends the localized service information to the AMF via the AUSF, and the AMF sends the localized service information derived from the DCS to the terminal.

Optionally, in some embodiments of the present disclosure, the registration request does not include the SNPN onboarding indication information, in which the localized service information is derived from preconfiguration on the AMF or from a home network of the terminal.

In a possible implementation, in a home network scenario, the terminal may send the registration request to the home network. The AMF receives the registration request sent by the terminal and performs the authentication/security procedure for the terminal, and after the terminal is successfully registered, the AMF automatically delivers required localized service information to the terminal. As an example, the localized service information may be carried in a registration accept message. The localized service information sent by the AMF to the terminal may be derived from the preconfiguration on the AMF (for example, the localized service information is pre-configured on the AMF), or from the home network to the AMF. The AMF sends the localized service information sent by the home network to the terminal. For example, the localized service information sent by the AMF to the terminal may be sent by the UDM or the UDR of the home network to the AMF, and then the AMF sends the localized service information to the terminal.

In a possible implementation, in a roaming scenario, the terminal may send the registration request to the serving network. The AMF receives the registration request sent by the terminal and performs the authentication/security procedure for the terminal, and after the terminal is successfully registered, the AMF automatically delivers required localized service information to the terminal. As an example, the localized service information may be carried in the registration accept message. The localized service information sent by the AMF to the terminal may be derived from the preconfiguration on the AMF (for example, the localized service information is pre-configured on the AMF), or from the home network of the terminal to the AMF via the SoR mechanism. For example, in a registration process where the terminal is located in the serving network (also known as a visiting place or a roaming place, that is, the roaming scenario), a UDM network element corresponding to the terminal may respond to a subscriber information request of the visiting AMF network element and send SoR information to the visiting AMF network element. The SoR information carries the localized service information required by the terminal. The terminal selects the target hosting network based on the localized service information fed back by the visiting AMF network element.

In some embodiments of the present disclosure, the localized service information may include, but is not limited to, at least one of: a localized service name; an IP address of a localization server; an FQDN (also known as an official domain name or a full domain name) of a localization server; one or more hosting network identifiers and/or names; or valid time information and/or valid location information.

In an embodiment of the present disclosure, the localized service information may include, but is not limited to, the localized service name or the FQDN of the localized server.

In an embodiment of the present disclosure, the localized service information may include, but is not limited to, the localized service name or the IP address of the localized server.

In an embodiment of the present disclosure, the localized service information may include, but is not limited to, the localized service name, the one or more hosting network identifiers and/or names, the valid time information and/or valid location information. The location may be located place information.

In an implementation, the valid time information may include a time period that the localized service is allowed to be performed, for example, the localized service is allowed to be performed from 8:00 to 16:00 at daytime. The valid location information may include location information that the localized service is allowed to be performed, for example, the localized service is allowed to be performed in a region A. It may be understood that contents included in the valid time information and the valid location information are merely examples and may not be regarded as specific limitations of the present disclosure, that is, the valid time information and the valid location information may also respectively include other information, which is not limited in the embodiments of the present disclosure.

It needs to be noted that the above embodiments are not exhaustive but merely illustrative of some examples. The above embodiments may be implemented independently or in various combinations. The above examples are for illustrative purposes only and do not specifically limit the scope of protection of the embodiments of the present disclosure.

By implementing the embodiments of the present disclosure, the AMF may send the localized service information to the terminal, and then the terminal selects the target hosting network based on the localized service information, so as to provide the localized service to the terminal via the target hosting network, which may solve the problem of how the terminal obtains the localized service, and enable the terminal to use the localized service provided by the hosting network.

The embodiments of the present disclosure also provide a method for providing a localized service via a hosting network. Please refer to FIG. 6, which is a flowchart of another method for providing a localized service via a hosting network according to embodiments of the present disclosure. It needs to be noted that the method may be performed by a core network. As shown in FIG. 6, the method may include but is not limited to the following steps.

At step 601, a registration request sent by a terminal is received.

At step 602, localized service information is sent to the terminal, in which the localized service information is configured to assist the terminal in selecting a target hosting network, and the target hosting network is configured to provide the localized service.

Optionally, in some embodiments of the present disclosure, the registration request includes SNPN onboarding indication information. The SNPN onboarding indication information indicates a current first network to deliver the localized service information to the terminal, in which the localized service information is derived from preconfiguration on the AMF in a core network or from a DCS. As an example, the core network is a core network of the current first network. The current first network may include an (R)AN and a core network. The AMF in this embodiment is the AMF of the core network in the current first network. The current first network may be a network connected to the terminal, or may be a home network of the terminal, or may be a serving network of the terminal, or may be a hosting network.

In a possible implementation, the core network receives the registration request sent by the terminal via the (R)AN with "SNPN onboarding" as a registration type. The registration request includes SNPN onboarding indication information. The SNPN onboarding indication information may indicate the core network to send the localized service information to the terminal.

The localized service information received by the terminal may be derived from the preconfiguration on the AMF in the core network or from the DCS. For example, an authentication/security procedure is performed between the terminal and the DCS via the AMF or an AUSF. When the authentication is successful, the DCS sends the localized service information to the AMF in the core network via the AUSF, and the AMF sends the localized service information derived from the DCS to the terminal.

Optionally, in some embodiments of the present disclosure, the registration request does not include SNPN onboarding indication information, in which the localized service information is derived from preconfiguration on the AMF in the core network or from a home network of the terminal.

In a possible implementation, in a home network scenario, the terminal may send the registration request to the home network. The core network receives the registration request sent by the terminal and performs the authentication/security procedure for the terminal, and after the terminal is successfully registered, the core network automatically delivers required localized service information to the terminal. As an example, the localized service information may be carried in a registration accept message. The localized service information sent by the core network to the terminal may be derived from the preconfiguration on the AMF in the core network in the core network (for example, the localized service information is pre-configured on the AMF), or from the home network to the AMF in the core network. The AMF sends the localized service information sent by the home network to the terminal. For example, the localized service information received by the terminal may be sent by the UDM or the UDR of the home network to the AMF, and then the AMF sends the localized service information to the terminal.

In a possible implementation, in a roaming scenario, the terminal may send the registration request to the serving network. The core network receives the registration request sent by the terminal and performs the authentication/security procedure for the terminal, and after the terminal is successfully registered, the core network automatically delivers required localized service information to the terminal. As an example, the localized service information may be carried in the registration accept message. The localized service information received by the terminal may be derived from the preconfiguration on the AMF in the core network (for example, the localized service information is pre-configured on the AMF), or from the home network of the terminal to the core network via the SoR mechanism. For example, in a registration process where the terminal is located in the serving network (also known as a visiting place or a roaming place, that is, the roaming scenario), a UDM network element corresponding to the terminal may respond to a subscriber information request of the visiting AMF network element and send SoR information to the visiting AMF network element. The SoR information carries the localized service information required by the terminal. The terminal selects the target hosting network based on the localized service information fed back by the visiting AMF network element.

In some embodiments of the present disclosure, the localized service information may include, but is not limited to, at least one of: a localized service name; an IP address of a localization server; an FQDN (also known as an official domain name or a full domain name) of a localization server; one or more hosting network identifiers and/or names; or valid time information and/or valid location information.

In an embodiment of the present disclosure, the localized service information may include, but is not limited to, the localized service name or the FQDN of the localized server.

In an embodiment of the present disclosure, the localized service information may include, but is not limited to, the localized service name or the IP address of the localized server.

In an embodiment of the present disclosure, the localized service information may include, but is not limited to, the localized service name, the one or more hosting network identifiers and/or names, the valid time information and/or valid location information. The location may be located place information.

In an implementation, the valid time information may include a time period that the localized service is allowed to be performed, for example, the localized service is allowed to be performed from 8:00 to 16:00 at daytime. The valid location information may include location information that the localized service is allowed to be performed, for example, the localized service is allowed to be performed in a region A. It may be understood that contents included in the valid time information and the valid location information are merely examples and may not be regarded as specific limitations of the present disclosure, that is, the valid time information and the valid location information may also respectively include other information, which is not limited in the embodiments of the present disclosure.

It needs to be noted that the above embodiments are not exhaustive but merely illustrative of some examples. The above embodiments may be implemented independently or in various combinations. The above examples are for illustrative purposes only and do not specifically limit the scope of protection of the embodiments of the present disclosure.

Optionally, in some embodiments of the present disclosure, the core network receives a PDU session establishment request sent by the terminal, in which the PDU session establishment request is initiated by the terminal according to the localized service information; and accesses the localized service by establishing a PDU session for the localized service provided by the target hosting network according to the PDU session establishment request.

By implementing the embodiments of the present disclosure, the localized service information is sent to the terminal via the core network, and the terminal selects the target hosting network based on the localized service information, so as to provide the localized service to the terminal via the target hosting network, which may solve the problem of how the terminal obtains the localized service, and enable the terminal to use the localized service provided by the hosting network.

The embodiments of the present disclosure also provide a method for providing a localized service via a hosting network. Please refer to FIG. 7, which is a flowchart of another method for providing a localized service via a hosting network according to embodiments of the present disclosure. As shown in FIG. 7, the method may include but is not limited to the following steps.

At step 701, the AMF receives a registration request sent by a terminal.

At step 702, the AMF sends localized service information to the terminal after the terminal is successfully registered in a network, in which the localized service information is configured to assist the terminal in selecting a target hosting network, and the target hosting network is configured to provide the localized service.

Optionally, in some embodiments of the present disclosure, the registration request includes SNPN onboarding indication information. The SNPN onboarding indication information indicates a current first network to deliver the localized service information to the terminal. In a possible implementation, the implementation that the AMF sends the localized service information to the terminal after the terminal is successfully registered in a network may include but is not limited to the following steps.

At step 702a1, the AMF selects the AUSF based on SNPN onboarding indication information.

At step 702a2, the AMF performs authentication on the terminal and a DCS via a selected AUSF.

At step 702a3, after successful authentication, the AMF receives the localized service information sent by the DCS via the selected AUSF, and sends the localized service information to the terminal.

In another possible implementation, the implementation that the AMF sends the localized service information to the terminal after the terminal is successfully registered in a network may include but is not limited to the following steps.

At step 702b1, the AMF selects the AUSF based on the SNPN onboarding indication information.

At step 702b2, the AMF performs authentication on the terminal and the DCS via a selected AUSF.

At step 702b3, after successful authentication, the AMF sends preconfigured localized service information on the AMF to the terminal.

Optionally, in some embodiments of the present disclosure, the registration request does not include the SNPN onboarding indication information. In a possible implementation, the implementation that the AMF sends the localized service information to the terminal after the terminal is successfully registered in a network may include but is not limited to the following steps.

At step 702c1, the AMF selects the AUSF based on the registration request in a case that a current first network of the terminal is a home network of the terminal.

At step 702c2, the AMF performs authentication on the terminal via a selected AUSF.

At step 702c3, after successful authentication, the AMF receives the localized service information sent by an UDM or an UDR, and sends the localized service information to the terminal, in which the core network is a core network in the current first network, and the UDM and the UDR are network elements of the core network.

In another possible implementation, the implementation that the AMF sends the localized service information to the terminal after the terminal is successfully registered in a network may include but is not limited to the following steps.

At step 702d1, the AMF selects the AUSF based on the registration request in a case that a current first network of the terminal is a home network of the terminal.

At step 702d2, the AMF performs authentication on the terminal via a selected AUSF.

At step 702d3, after successful authentication, the AMF sends preconfigured localized service information on the AMF to the terminal.

Optionally, in some embodiments of the present disclosure, the registration request does not include the SNPN onboarding indication information. In a possible implementation, the implementation that the AMF sends the localized service information to the terminal after the terminal is successfully registered in a network may include but is not limited to the following steps.

At step 702e1, the AMF selects the AUSF based on the registration request in a case that a current first network of the terminal is a serving network of the terminal.

At step 702e2, the AMF performs authentication on the terminal via a selected AUSF.

At step 702e3, after successful authentication, the AMF receives the localized service information sent by a home network of the terminal via a SoR mechanism, and sends the localized service information to the terminal.

In another possible implementation, the implementation that the AMF sends the localized service information to the terminal after the terminal is successfully registered in a network may include but is not limited to the following steps.

At step 702f1, the AMF selects the AUSF based on the registration request in a case that a current first network of the terminal is a serving network of the terminal.

At step 702f2, the AMF performs authentication on the terminal via a selected AUSF.

At step 702f3, after successful authentication, the AMF sends preconfigured localized service information on the AMF to the terminal.

Optionally, in some embodiments of the present disclosure, the AMF receives a PDU session establishment request sent by the terminal, in which the PDU session establishment request is initiated by the terminal according to the localized service information. A session management function (SMF) receives the PDU session establishment request forwarded by the AMF, and establishes a session context of the terminal based on the PDU session establishment request, and the SMF obtains policy-related information from a policy control function (PCF), and selects a user plane function (UPF) to establish a user plane tunnel from a radio access network (RAN) to the UPF. The SMF sends a session-related configuration parameter and a quality of service (QoS) parameter to the AMF, and the AMF forwards the session-related configuration parameter and the QoS parameter to the terminal, to establish a PDU session of the localized service and access the localized service.

By implementing the embodiments of the present disclosure, the localized service information is sent to the terminal via the AMF, and the terminal selects the target hosting network based on the localized service information, so as to provide the localized service to the terminal via the target hosting network, which may solve the problem of how the terminal obtains the localized service, and enable the terminal to use the localized service provided by the hosting network.

To facilitate understanding of the present disclosure, the embodiments of the present disclosure will be described in detail in combination with FIG. 8.

For example, as shown in FIG. 8, the method for providing a localized service via a hosting network in the embodiments of the present disclosure may include but is not limited to the following steps.

At step 1, an UE sends a registration request to an AMF of an core network in an current first network via an (R)AN in the current first network with "SNPN onboarding" as a registration type. In order to allow the UE to access the SNPN for provisioning the UE with specific localized service information from a subscribe-owner-SNPN.

At step 2, based on an SNPN onboarding indication, the AMF selects an AUSF for an authentication/security procedure.

At step 3, the authentication/security procedure is performed between the UE and a DCS via the AMF/AUSF, and the DCS sends the localized service information to the AMF via the AUSF when the authentication is successful.

At step 4, the AMF sends a registration accept message carrying the localized service information to the UE via the (R)AN. In an embodiment, the localized service information is derived from the DCS.

At step 5, the UE/user determines the specific localized service and selects a corresponding hosting network (that is, selects a target hosting network) by using the localized service information received from the DCS.

At step 6, the UE triggers to establish the PDU session that restricted for the localized service, by using the localized service information (e.g., the localized service name/FQDN, etc.). For example, the UE initiates a PDU session establishment request based on the localized service information. The UE sends the PDU session establishment request to the SMF via the (R)AN/AMF, in which the request includes some service requirements. The SMF establishes the session context of the UE, and then obtains policy-related information from the PCF. Then, the SMF selects an appropriate UPF to establish a user plane tunnel from the RAN to the UPF. Later, the SMF sends the session-related configuration parameter and the QoS parameter to the RAN and the UE via the AMF. The AMF, the AUSF, the SMF, the PCF and the UPF are all network elements in the core network.

It is worth noting that in step 5, if the UE selects another network as the hosting network, the UE will perform step 1 to step 4 for registration. After successful authentication, the UE triggers the establishment of the PDU session that restricts for the localized service.

In the present disclosure, after the authentication between the terminal and the DCS via the hosting network (SNPN), the AMF obtains the localized service information from the DCS via the AUSF and sends the localized service information to the terminal. The terminal triggers the establishment of the restricted PDU session for the localized service via the hosting network based on the localized service information, so as to enhance a configuration process in a UE onboarding operation period, which may solve the problem of how the terminal obtains the localized service, and enable the terminal to use the localized service provided by the hosting network.

In the embodiments provided by the present disclosure, the method in the embodiments of the present disclosure is described from perspectives of the network device and the AMF, respectively. To perform functions of the method provided in the above embodiments, the network device and the AMF may include a hardware structure and a software module, and realize the above functions with the hardware structure, the software module, or a combination of the hardware structure and the software module. A specific function may be performed as the hardware structure, the software module, or the hardware structure plus the software module.

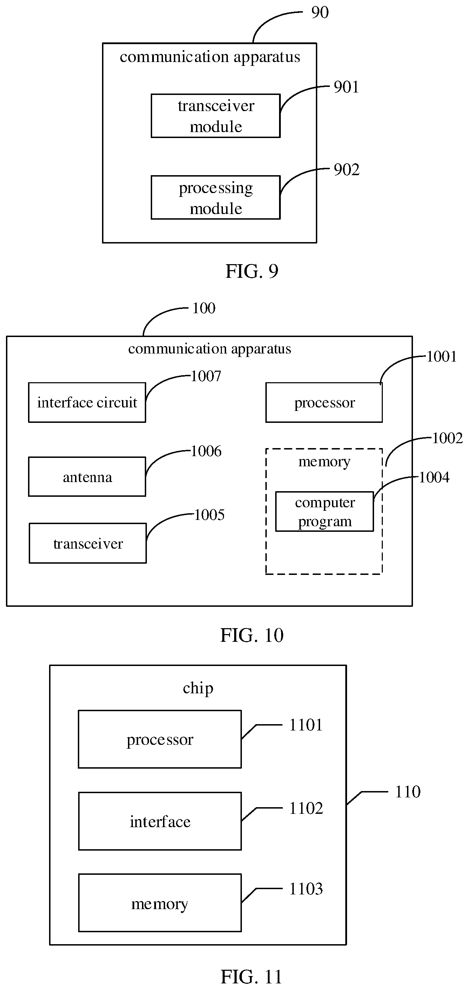

Please refer to FIG. 9, which is a block diagram of a communication apparatus 90 according to the embodiments of the present disclosure. The communication apparatus 90 shown in FIG. 9 may include a transceiver module 901 and a processing module 902. The transceiver module 901 may include a sending module and/or a receiving module, in which the sending module is used to achieve a sending function, and the receiving module is used to achieve a receiving function. The transceiver module 901 may achieve the sending function and/or the receiving function.

The communication apparatus 90 may be a terminal, an apparatus in a terminal, or an apparatus capable of being used in combination with a terminal. Or, the communication apparatus 90 may be a core network, an apparatus in a core network, or an apparatus capable of being used in combination with a core network.

The communication apparatus 90 may be a terminal, including: a transceiver module 901, configured to obtain localized service information from a current first network; and a processing module 902, configured to select a target hosting network based on the localized service information, in which the target hosting network is configured to provide a localized service.

In an implementation, the localized service information includes at least one of: a localized service name; an IP address of a localization server; an FQDN of a localization server; one or more hosting network identifiers and/or names; or valid time information and/or valid location information.

In a possible implementation, the transceiver module 901 is further configured to send a registration request to the current first network, and the processing module 902 is configured to obtain the localized service information from the current first network based on the registration request.

In a possible implementation, the transceiver module 901 is specifically configured to send the registration request to an AMF, in which the registration request includes SNPN onboarding indication information, and the SNPN onboarding indication information indicates the current first network to deliver the localized service information to the terminal; and receive the localized service information sent by the AMF after the terminal is successfully registered in a network, in which the localized service information is derived from preconfiguration on the AMF or from a DCS.

In a possible implementation, the processing module 902 is further configured to access the localized service by triggering establishment of a restricted PDU session for the localized service via the target hosting network based on the localized service information.

In a possible implementation, the transceiver module 901 is specifically configured to send the registration request to a home network of the terminal in a case that the current first network is the home network; and receive the localized service information sent by the AMF after the terminal is successfully registered in a network, in which the localized service information is derived from preconfiguration on the AMF or from UDM or an UDR of the home network.

In a possible implementation, the transceiver module 901 is specifically configured to send the registration request to a serving network of the terminal in a case that the current first network is the serving network; and receive the localized service information sent by the AMF after the terminal is successfully registered in a network, in which the localized service information is derived from preconfiguration on the AMF or is sent to the AMF by a home network of the terminal via an SoR mechanism.

In an implementation, the processing module 902 is further configured to trigger an onboarding registration process of the terminal on a second network in a case that the terminal selects the second network as the target hosting network, in which the second network is different from the current first network.

The communication apparatus 90 may be an AMF (such as the AMF in the core network), including: a transceiver module 901, configured to receive a registration request sent by a terminal; and send localized service information to the terminal after the terminal is successfully registered in a network, in which the localized service information is configured to assist the terminal in selecting a target hosting network, and the target hosting network is configured to provide the localized service.

In an implementation, the registration request includes SNPN onboarding indication information, the SNPN onboarding indication information indicating a current first network to deliver the localized service information to the terminal, in which the localized service information is derived from preconfiguration on the AMF or from a DCS.

In another implementation, the registration request does not include the SNPN onboarding indication information, in which the localized service information is derived from preconfiguration on the AMF or from a home network of the terminal.

In a possible implementation, the localized service information includes at least one of: a localized service name; an IP address of a localization server; an FQDN of a localization server; one or more hosting network identifiers and/or names; or valid time information and/or valid location information.

About apparatuses in the above embodiments, specific ways in which each module performs operations have been described in detail in the embodiments related to the method, which will not be repeated here.

Please refer to FIG. 10, which is a block diagram of another communication apparatus 100 according to the embodiments of the present disclosure. The communication apparatus 100 may be a network device, an AMF (such as the AMF in the above core network), a chip, a chip system, a processor, etc. that supports the terminal to implement the method, or a chip, a chip system, a processor, etc. that supports the AMF (such as the AMF in the above core network) to implement the method. The apparatus may be used to implement the method in the above method embodiments. For details, please refer to the above method embodiments.

The communication apparatus 100 may include one or more processors 1001. The processor 1001 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 100 may also include one or more memories 1002 for storing the computer program 1004. When the processor 1001 executes the computer program 1004, the communication apparatus 100 is caused to implement the method in the above method embodiments. Optionally, the memory 1002 may also store data. The communication apparatus 100 and the memory 1002 may be set up separately or integrated together.

Optionally, the communication apparatus 100 may also include a transceiver 1005 and an antenna 1006. The transceiver 1005 may be called a transceiver unit, a transceiver machine, or a transceiver circuit, etc., to perform the receiving and sending function. The transceiver 1005 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 100 may also include one or more interface circuits 1007. The interface circuit 1007 is used to receive code instructions and transmit the code instructions to the processor 1001. The processor 1001 runs the code instructions to cause the communication apparatus 100 to implement the method in the above method embodiments.

The communication apparatus 100 may be a terminal. The processor 1001 is used to perform step 102 in FIG. 1; step 203 in FIG. 2, step 303 in FIG. 3, step 403 in FIG. 4, or step 5 and step 6 in FIG. 8. The transceiver 1005 is used to perform step 101 in FIG. 1; step S201 and step 202 in FIG. 2; step 301 and step 302 in FIG. 3; step 401 and step 402 in FIG. 4; or step 1 in FIG. 8.

The communication apparatus 100 may be an AMF (such as the AMF in the above core network). The transceiver 1005 is used to perform step 501 and step 502 in FIG. 5; or step 4 in FIG. 8. The processor 1001 is used to perform step 2 in FIG. 8.

In an implementation, the processor 1001 may include a transceiver for performing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the processor 1001 may store a computer program. When the computer program is running on the processor 1001, the communication apparatus 100 is caused to implement the method in the above method embodiments. The computer program may be solidified in the processor 1001, in which case the processor 1001 may be implemented in hardware.

In an implementation, the communication apparatus 100 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a core network (such as the AMF in the core network) or a terminal, but the scope of the communication apparatus in the present disclosure is not limited to this, and the structure of the communication apparatus may not be restricted by FIG. 10. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the block diagram of a chip in FIG. 11. The chip illustrated in FIG. 11 includes a processor 1101 and an interface 1102. There may be one or more processors 1101, and there may be one or more interfaces 1102.

For the case where the chip is used to perform functions of the terminal in the embodiments of the present disclosure,
the interface 1102 is configured to obtain localized service information from a current first network; and the processor 1101 is configured to select a target hosting network based on the localized service information, in which the target hosting network is configured to provide the localized service.

In an implementation, the localized service information includes at least one of: a localized service name; an IP address of a localization server; an FQDN of a localization server; one or more hosting network identifiers and/or names; or valid time information and/or valid location information.

In a possible implementation, the interface 1102 is configured to send a registration request to the current first network, and the processor 1101 is configured to obtain the localized service information from the current first network based on the registration request.

In a possible implementation, the interface 1102 is specifically configured to send the registration request to an AMF, in which the registration request includes SNPN onboarding indication information, and the SNPN onboarding indication information indicates the current first network to deliver the localized service information to the terminal; and receive the localized service information sent by the AMF after the terminal is successfully registered in a network, in which the localized service information is derived from preconfiguration on the AMF or from a DCS.

In a possible implementation, the processor 1101 is further configured to access the localized service by triggering establishment of a restricted PDU session for the localized service via the target hosting network based on the localized service information.

In a possible implementation, the interface 1102 is specifically configured to send the registration request to a home network of the terminal in a case that the current first network is the home network; and receive the localized service information sent by the AMF after the terminal is successfully registered in a network, in which the localized service information is derived from preconfiguration on the AMF or from UDM or an UDR of the home network.

In a possible implementation, the interface 1102 is specifically configured to send the registration request to a serving network of the terminal in a case that the current first network is the serving network; and receive the localized service information sent by the AMF after the terminal is successfully registered in a network, in which the localized service information is derived from preconfiguration on the AMF or is sent to the AMF by a home network of the terminal via an SoR mechanism.

In an implementation, the processor 1101 is further configured to trigger an onboarding registration process of the terminal on a second network in a case that the terminal selects the second network as the target hosting network, in which the second network is different from the current first network.

For the case where the chip is used to perform functions of the AMF (such as the AMF in the above core network) in the embodiments of the present disclosure,
the interface 1102 is configured to receive a registration request sent by a terminal; and send localized service information to the terminal after the terminal is successfully registered in a network, in which the localized service information is configured to assist the terminal in selecting a target hosting network, and the target hosting network is configured to provide the localized service.

In an implementation, the registration request includes SNPN onboarding indication information, the SNPN onboarding indication information indicating a current first network to deliver the localized service information to the terminal, in which the localized service information is derived from preconfiguration on the AMF or from a DCS.

In another implementation, the registration request does not include the SNPN onboarding indication information, in which the localized service information is derived from preconfiguration on the AMF or from a home network of the terminal.

In a possible implementation, the localized service information includes at least one of: a localized service name; an IP address of a localization server; an FQDN of a localization server; one or more hosting network identifiers and/or names; or valid time information and/or valid location information.

Optionally, the chip also includes a memory 1103, which is used to store necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the present disclosure also provide a communication system, including a communication apparatus as the terminal and a communication apparatus as the AMF (such as the AMF in the above core network) in the embodiments of FIG. 9, or including a communication apparatus as the terminal and a communication apparatus as the AMF (such as the AMF in the above core network) in the embodiments of FIG. 10.

The embodiments of the present disclosure also provide a communication system, which is used to implement the method of the embodiment as shown in FIG. 6 above.

The embodiments of the present disclosure also provide a communication system, including an AMF configured to perform the method of the embodiment as shown in FIG. 5 above.

The embodiments of the present disclosure also provide a readable storage medium for storing instructions. When the instructions are executed by a computer, the function of any method embodiment is implemented.

The embodiments of the present disclosure also provide a computer program product. When the computer program product is executed by a computer, the function of any method embodiment is implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for providing a localized service via a hosting network, performed by a terminal, comprising:
obtaining localized service information from a current first network; and
selecting a target hosting network based on the localized service information, wherein the target hosting network is configured to provide the localized service.

2. The method of claim 1, wherein the localized service information comprises at least one of:
a localized service name;
an Internet protocol (IP) address of a localization server;
a fully qualified domain name (FQDN) of a localization server;
one or more hosting network identifiers and/or names, wherein the target hosting network is determined from one or more hosting networks; or
valid time information and/or valid location information.

3. The method of claim 1 or 2, wherein obtaining the localized service information from the current first network comprises:
sending a registration request to the current first network, and obtaining the localized service information from the current first network based on the registration request.

4. The method of claim 3, wherein sending the registration request to the current first network, and obtaining the localized service information from the current first network based on the registration request comprises:
sending the registration request to an access and mobility management function (AMF), wherein the registration request comprises standalone non-public network (SNPN) onboarding indication information, and the SNPN onboarding indication information indicates the current first network to deliver the localized service information to the terminal; and
receiving the localized service information sent by the AMF after the terminal is successfully registered in a network, wherein the localized service information is derived from preconfiguration on the AMF or from a default credential server (DCS).

5. The method of claim 4, further comprising:
accessing the localized service by triggering establishment of a restricted packet data unit (PDU) session for the localized service via the target hosting network based on the localized service information.

6. The method of claim 3, wherein sending the registration request to the current first network, and obtaining the localized service information from the current first network based on the registration request comprises:
sending the registration request to a home network of the terminal in a case that the current first network is the home network; and
receiving the localized service information sent by the AMF after the terminal is successfully registered in a network, wherein the localized service information is derived from preconfiguration on the AMF or from unified data management (UDM) or a unified data repository (UDR) of the home network.

7. The method of claim 3, wherein sending the registration request to the current first network, and obtaining the localized service information from the current first network based on the registration request comprises:
sending the registration request to a serving network of the terminal in a case that the current first network is the serving network; and
receiving the localized service information sent by the AMF after the terminal is successfully registered in a network, wherein the localized service information is derived from preconfiguration on the AMF or is sent to the AMF by a home network of the terminal via a steering of roaming (SoR) mechanism.

8. The method of any one of claims 1 to 7, further comprising:
triggering an onboarding registration process of the terminal on a second network in a case that the terminal selects the second network as the target hosting network, wherein the second network is different from the current first network.

9. A method for providing a localized service via a hosting network, performed by an access and mobility management function (AMF), comprising:
receiving a registration request sent by a terminal; and
sending localized service information to the terminal after the terminal is successfully registered in a network, wherein the localized service information is configured to assist the terminal in selecting a target hosting network, and the target hosting network is configured to provide the localized service.

10. The method of claim 9, wherein the registration request comprises standalone non-public network (SNPN) onboarding indication information, the SNPN onboarding indication information indicating a current first network to deliver the localized service information to the terminal, wherein the localized service information is derived from preconfiguration on the AMF or from a default credential server (DCS).

11. The method of claim 9, wherein the registration request does not comprise SNPN onboarding indication information, wherein the localized service information is derived from preconfiguration on the AMF or from a home network of the terminal.

12. The method of any one of claims 9 to 11, wherein the localized service information comprises at least one of:
a localized service name;
an Internet protocol (IP) address of a localization server;
a fully qualified domain name (FQDN) of a localization server;
one or more hosting network identifiers and/or names, wherein the target hosting network is determined from one or more hosting networks; or
valid time information and/or valid location information.

13. A method for providing a localized service via a hosting network, performed by a core network, comprising:
receiving a registration request sent by a terminal; and
sending localized service information to the terminal, wherein the localized service information is configured to assist the terminal in selecting a target hosting network, and the target hosting network is configured to provide the localized service.

14. The method of claim 13, wherein the registration request comprises standalone non-public network (SNPN) onboarding indication information, the SNPN onboarding indication information indicating a current first network to deliver the localized service information to the terminal, wherein the localized service information is derived from preconfiguration on the core network or from a default credential server (DCS).

15. The method of claim 13, wherein the registration request does not comprise SNPN onboarding indication information, wherein the localized service information is derived from preconfiguration on the core network or from a home network of the terminal.

16. The method of any one of claims 13 to 15, further comprising:
receiving a packet data unit (PDU) session establishment request sent by the terminal, wherein the PDU session establishment request is initiated by the terminal according to the localized service information; and
accessing the localized service by establishing a PDU session for the localized service provided by the target hosting network according to the PDU session establishment request.

17. The method of any one of claims 13 to 16, wherein the localized service information comprises at least one of:
a localized service name;
an Internet protocol (IP) address of a localization server;
a fully qualified domain name (FQDN) of a localization server;
one or more hosting network identifiers and/or names, wherein the target hosting network is determined from one or more hosting networks; or
valid time information and/or valid location information.

18. A method for providing a localized service via a hosting network, performed by an access and mobility management function (AMF) and a session management function (SMF), comprising:
receiving, by the AMF, a registration request sent by a terminal; and
sending, by the AMF, localized service information to the terminal after the terminal is successfully registered in a network, wherein the localized service information is configured to assist the terminal in selecting a target hosting network, and the target hosting network is configured to provide the localized service.

19. The method of claim 18, wherein the registration request comprises standalone non-public network (SNPN) onboarding indication information, the SNPN onboarding indication information indicating a current first network to deliver the localized service information to the terminal, wherein sending, by the AMF, the localized service information to the terminal after the terminal is successfully registered in the network comprises:
selecting, by the AMF, an authentication server function (AUSF) based on the SNPN onboarding indication information;
performing, by the AMF, authentication on the terminal and a default credential server (DCS) via a selected AUSF; and
after successful authentication, receiving, by the AMF, the localized service information sent by the DCS via the selected AUSF, and sending the localized service information to the terminal; or
after successful authentication, sending, by the AMF, preconfigured localized service information on the AMF to the terminal.

20. The method of claim 18, wherein the registration request does not comprise SNPN onboarding indication information, wherein sending, by the AMF, the localized service information to the terminal after the terminal is successfully registered in the network comprises:
selecting, by the AMF, the AUSF based on the registration request in a case that a current first network of the terminal is a home network of the terminal;
performing, by the AMF, authentication on the terminal via a selected AUSF; and
after successful authentication, receiving, by the AMF, the localized service information sent by unified data management (UDM) or a unified data repository (UDR), and sending the localized service information to the terminal, wherein the core network is a core network in the current first network, and the UDM and the UDR are network elements of the core network; or
after successful authentication, sending, by the AMF, preconfigured localized service information on the AMF to the terminal.

21. The method of claim 18, wherein the registration request does not comprise the SNPN onboarding indication information, wherein sending, by the AMF, the localized service information to the terminal after the terminal is successfully registered in the network comprises:
selecting, by the AMF, the AUSF based on the registration request in a case that a current first network of the terminal is a serving network of the terminal;
performing, by the AMF, authentication on the terminal via a selected AUSF; and
after successful authentication, receiving, by the AMF, the localized service information sent by a home network of the terminal via a steering of roaming (SoR) mechanism, and sending the localized service information to the terminal; or
after successful authentication, sending, by the AMF, preconfigured localized service information on the AMF to the terminal.

22. The method of any one of claims 18 to 21, further comprising:
receiving, by the AMF, a packet data unit (PDU) session establishment request sent by the terminal, wherein the PDU session establishment request is initiated by the terminal based on the localized service information;
receiving, by the SMF, the PDU session establishment request forwarded by the AMF, and establishing a session context of the terminal based on the PDU session establishment request;
obtaining, by the SMF, policy-related information from a policy control function (PCF), and selecting a user plane function (UPF) to establish a user plane tunnel from a radio access network (RAN) to the UPF;
sending, by the SMF, a session-related configuration parameter and a quality of service (QoS) parameter to the AMF; and
forwarding, by the AMF, the session-related configuration parameter and the QoS parameter to the terminal, to establish a PDU session of the localized service and access the localized service.

23. The method of any one of claims 18 to 22, wherein the localized service information comprises at least one of:
a localized service name;
an Internet protocol (IP) address of a localization server;
a fully qualified domain name (FQDN) of a localization server;
one or more hosting network identifiers and/or names, wherein the target hosting network is determined from one or more hosting networks; or
valid time information and/or valid location information.

24. A communication apparatus, comprising:
a transceiver module, configured to obtain localized service information from a current first network; and
a processing module, configured to select a target hosting network based on the localized service information, wherein the target hosting network is configured to provide a localized service.

25. A communication apparatus, comprising:
a transceiver module, configured to receive a registration request sent by a terminal; and
the transceiver module, further configured to send localized service information to the terminal after the terminal is successfully registered in a network, wherein the localized service information is configured to assist the terminal in selecting a target hosting network, and the target hosting network is configured to provide a localized service.

26. A communication apparatus, wherein the apparatus is configured to implement the method of any one of claims 13 to 17.

27. A communication apparatus, comprising:
an access and mobility management function (AMF), configured to implement the method of any one of claims 9 to 12.

28. A communication apparatus, comprising a processor and a memory for storing a computer program which, when executed by the processor, causes the device to implement the method of any one of claims 1 to 8.

29. A communication apparatus, comprising a processor and a memory for storing a computer program which, when executed by the processor, causes the device to implement the method of any one of claims 9 to 12.
